Europäisches Patentamt

European Patent Office

Office européen des brevets

(11) Veröffentlichungsnummer: **0 300 156**
**A2**

(12) **EUROPÄISCHE PATENTANMELDUNG**

(21) Anmeldenummer: 88108098.0

(51) Int. Cl.⁴: **B44C 1/00 , B32B 5/00**

(22) Anmeldetag: 20.05.88

(30) Priorität: 22.07.87 DE 3724231

(43) Veröffentlichungstag der Anmeldung:
25.01.89 Patentblatt 89/04

(84) Benannte Vertragsstaaten:
AT BE CH FR GB LI NL

(71) Anmelder: **REPOL POLYESTER-PRODUKTE GMBH & CO.KG.**
**Clarholzer Strasse 88-92**
**D-4836 Herzebrock 1(DE)**

(72) Erfinder: **Schrader, Lothar**
**Eckern 12**
**D-4836 Herzebrock(DE)**

(74) Vertreter: **Stracke, Alexander, Dipl.-Ing. et al**
**Jöllenbecker Strasse 164**
**D-4800 Bielefeld 1(DE)**

(54) Mehrschicht-Ornamentplatte sowie Verfahren zur Herstellung einer Mehrschicht-Ornamentplatte.

(57) 2.1 Die erfindungsgemäße, aus äußeren Polyesterschichten und einer Polyurethankernschicht bestehenden Ornamentplatte soll auch durch extreme Weiterungseinflüsse eine Beschädigung ausgeschlossen werden.

2.2 Zumindest in eine äußere Schicht (12) werden zur Bildung der Ornamente Musternuten (11) eingefräst. Um die Musternuten (11) farblich von den äußeren Schichten (12, 13) abzuheben, werden die Musternuten (11) in Kunststoff-Füllungen (15) eingefräst, die in konturengerecht gefrästen Ausnehmungen (16) liegen.

2.3 Die erfindungsgemäße Mehrschicht-Ornamentplatte kann beispielsweise als Füllungsplatte für eine Haustür, für ein Garagentor oder als Verkleidungsplatte jeglicher Art verwendet werden.

Fig. 6

## Mehrschicht-Ornamentplatte sowie Verfahren zur Herstellung einer Mehrschicht-Ornamentplatte

Die vorliegende Erfindung bezieht sich auf eine Mehrschicht-Ornamentplatte bei der die äußeren Schichten aus glasfaserverstärktem Kunststoff, vorzugsweise aus glasfaserverstärktem Polyester bestehen, und die eine aus einem Kunststoffschaum gebildete, mittlere Kernschicht aufweist. Die Erfindung bezieht sich ferner auf ein Verfahren zur Herstellung einer Mehrschicht-Ornamentplatte.

Bei den bisher bekannten Ornamentplatten werden die Ornamente durch ineinander gesteckte PVC-Profilleisten gebildet. Dazu ist ein verhältnismäßig hoher Fertigungsaufwand notwendig. Ferner ist noch nachteilig, daß in die Fugen Feuchtigkeit eindringen kann, die bei einem Frosteinbruch zu einer Beschädigung führen kann.

Der vorliegenden Erfindung liegt die Aufgabe zugrunde, eine Mehrschicht-Ornamentplatte der eingangs genannten Art in konstruktiv einfacher Weise so auszubilden, daß eine durch Witterungseinflüsse hervorgerufene Beschädigung oder negative Beeinträchtigung des ästhetischen Eindrucks augeschlossen werden kann. Der Erfindung liegt außerdem die Aufgabe zugrunde, ein Verfahren zu entwickeln, mit dem eine Mehrschicht-Ornamentplatte nach den Merkmalen des Anspruches 2 und gegebenenfalls auch noch nach den Merkmalen des Anspruches 3 wirtschaftlich herstellbar ist.

Zur Lösung der gestellten Aufgabe bezüglich der Mehrschicht-Oramentplatte wird erfindungsgemäß vorgeschlagen, daß die Außenlage von wenigstens einer äußeren Schicht glasfaserfrei ist und daß zumindest diese äußere Schicht bzw. diese äußeren Schichten zur Bildung von Ornamenten mit eingefrästen Musternuten versehen ist bzw. versehen sind.

Durch die glasfaserfreie Außenlage wird die Sichtseite der Mehrschicht-Ornamentplatte bestimmt. Durch die im Sinne einer Verzierung wirkenden Musternuten wird eine fugenfreie Außenfläche bzw. eine einstückige äußere Schicht erreicht, so daß das Eindringen von Feuchtigkeit unmögich ist. Demzufolge ist die erfindungsgemäße Mehrschicht-Ornamentplatte mit einer glattflächigen Platte gleichzusetzen. Der Fertigungsaufwand ist trotz des Fräsens der Nuten denkbar gering, da das Zusammenfügen aus den PVC-Profilleisten entfällt.

In weiterer Ausgestaltung der Erfindung ist vorgesehen, daß jede Musternut in einer in eine Ausnehmung der Mehrschicht-Ornamentplatte liegenden Füllung vorgesehen ist, und daß die Breite der Musternut ein klein wenig geringer ist als die Breite der Füllung. Die in die Ausnehmung eingebrachte Füllung kann beispielsweise aus dem gleichen Material bestehen wie die äußeren Schichten der Mehrschicht-Ornamentplatte. Dabei ergibt sich der große Vorteil, daß die Füllung eingefärbt werden kann, so daß die Mehrschicht-Ornamentplatte ge gebenenfalls im Sinne eines mehrfarbigen Musters gestaltet werden kann. Die Füllungen werden durch Ausgießen der Ausnehmungen mit einer Gießmasse hergestellt. Es erfolgt eine Verbindung der die Ausnehmungen begrenzenden Wandungen mit der Gießmasse, so daß auch bei dieser Ausführung von einer fugenfreien Oberfläche ausgegangen werden kann. Da die Breite der Nut ein klein wenig geringer ist als die der Füllung bleiben beim Fräsen der Nut beidseitige Stege erhalten. Dadurch können fertigungstechnisch bedingte Toleranzen ausgeglichen werden.

In besonders vorteilhafter Weise erstreckt sich zumindest die Füllung bis in die mittlere Kernschicht. Die äußeren Schichten sind normalerweise im Verhältnis zur mittleren Kernschicht relative dünn. Es besteht nunmehr die Möglichkeit, daß die Tiefe der Musternuten größer ist also die Dicke der äußeren Schichten.

Zur Löschung der gestellten Aufgabe bezüglich des Verfahrens wird erfindungsgemäß vorgeschlagen, daß zunächst in eine unbearbeitete, im wesentlichen aus den äußeren Schichten und der Kernschicht bestehenden Platte die Ausnehmungen gefertigt werden daß danach die Ausnehmungen mit einer aushärtbaren Kunststoffmasse gefüllt werden, und daß nach dem Aushärten der Kunststoffmasse die Musternuten gefräst werden.

Dieses erfindungsgemäße Verfahren ist besonders einfach, da die Fertigungsmöglichkeiten es zulassen, nicht nur geradlinig verlaufende Ausnehmungen bzw. Musternuten herzustellen, sondern auch kurven-bzw. bogenförmig verlaufende. DEr Querschnitt der Musternuten kann auch ungeometrisch sein. So ist es denkbar, daß die die Musternuten begrenzenden Randstege bogenförmig ausgebildet sind.

Weitere Kennzeichen und Merkmale einer vorteilhaften Ausgestaltung der vorliegenden Erfindung sind Gegenstand von weiteren Unteransprüchen und ergeben sich aus der nachfolgenden Beschreibung eines bevorzugten Ausführungsbeispiels.

Es zeigen:

Fig. 1 eine erste Ausführungsform einer erfindungsgemäßen Mehrschicht-Ornamentplatte in einer Teildraufsicht,

Fig. 2 die in der Fig. 1 dargestellte Platte im Querschnitt

Fig. 3-6 die einzelnen verfahrenstechnischen Schritte zur Herstellung einer weiteren Ausführungsform einer erfindungsgemäßen Mehrschicht-Ornamentplatte.

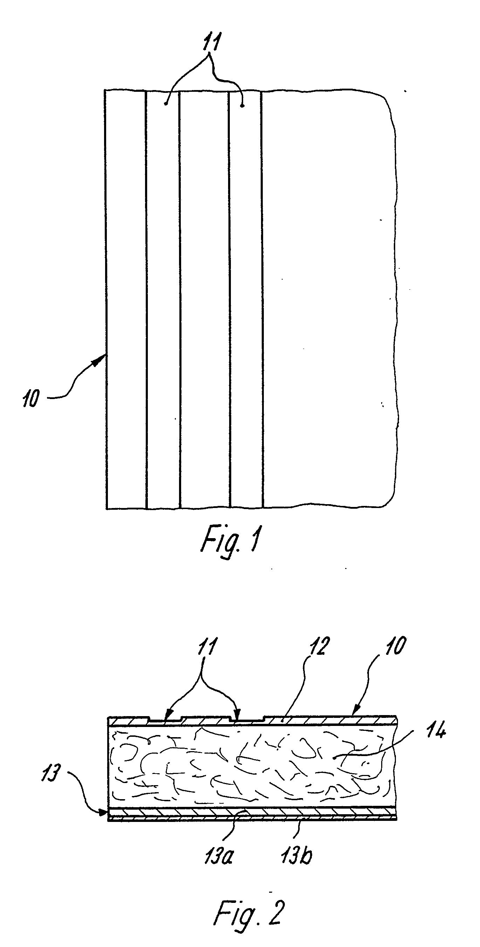

Die in den Fig. 1 und 2 als ein Ausführungsbeispiel aufgezeigte Mehrschicht-Ornamentplatte 10 weist mehrere parallel und im Abstand zueinander angeordnete Musternuten 11 auf, deren Tiefe, bezogen auf die Dicke der Mehrschicht-Ornamentplatte 10, relativ gering ist, wie insbesondere die Fig. 2 zeigt. Im Gegensatz zu der Darstellung nach der Fig. 1 können die Musternuten 11 schräg, vorzugsweise unter einem Winkel von 45° zu den Längskanten der Mehrschicht-Ornamentplatte 10 verlaufen. Die Musternuten 11 sind durch spangebende Bearbeitung, beispielsweise mittels eines Fräsers hergestellt worden.

Aus der Fig. 2 ist erkennbar daß die Mehrschicht-Ornamentplatte 10 aus zwei äußeren Schichten 12, 13 und einer Kernschicht 14 besteht. In nicht näher dargestellter Weise stehen die äußeren Schichten 12, 13 aus einem glasfaserverstärkten Kunststoff, vorzugsweise aus Polyester. Zumindest in der die Musternuten 11 aufweisenden äußeren Schicht 12 erstrecken sich die Glasfasern nur über den Bereich, der zwischen dem Grund der Musternuten 11 und der Kernschicht 14 liegt. Damit sie jedoch in den Musternuten 11 nicht sichtbar sind, ist die Tiefe der Nuten zweckmäßigerweise so gewählt, daß der Grund der Musternuten 11 frei von Glasfasern ist. Dadurch wird erreicht, daß der Grund der Musternuten 11 optisch mit der Außenfläche der äußeren Schicht 12 übereinstimmt. Die Kernschicht 14 kann beispielsweise aus einem Polyurethanschaum bestehen. Bei der Ausführung nach den Fi.g 1 und 2 besteht die frei von Musternuten gehaltene äußere Schicht 13 aus zwei nicht näher erläuterten Lagen 13a und 13b. Aus den Figuren ergibt sich noch, daß die Dicke der äußeren Schichten 12, 13 im Verhältnis zur Dicke der Kernschicht 14 gering ist. Bei der dargestellten Ausführung nach den Fig. 1 und 2 erstrecken sich Musternuten 11 nur über einen Teil der Dicke der äußeren Schicht 12, so daß auch deren Tiefe, bezogen auf die Gesamtdicke der Mehrsicht-Ornamentplatte 10, gering ist. Im Gegensatz zu der in den Fig. 1 und 2 dargestellten Ausführung ist es jedoch auch denkbar, daß die die Musternuten 11 aufweisende äußeren Schicht 12 wesentlich dicker ist als die frei von Musternuten gehaltene äußere Schicht 13. Bei einer derartigen Ausführung kann auch die Tiefe der Musternuten entsprechend groß sein.

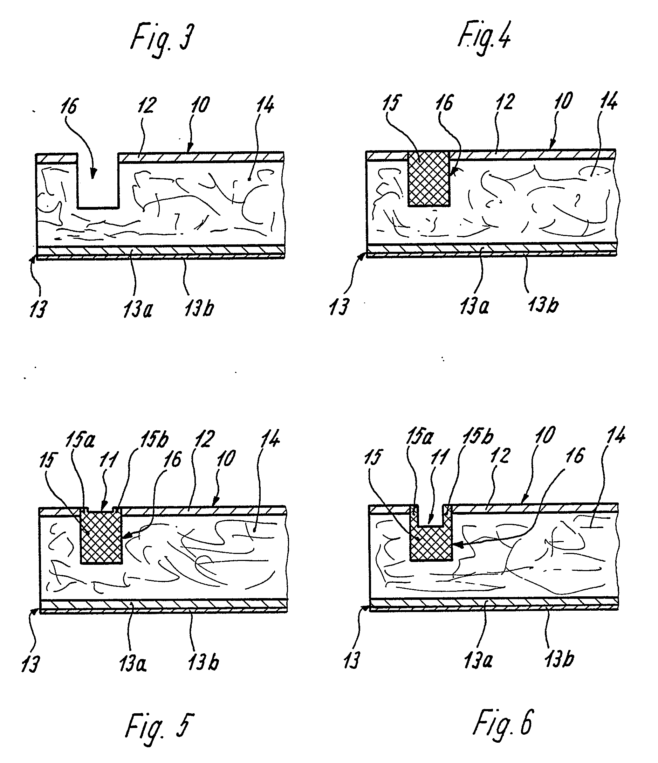

Eine weitere Ausführungsform einer erfindungsgemäßen Mehrschicht-Ornamentplatte 10 ist in der Fig. 6 dargestellt. Die Musternuten 11 liegen bei dieser Ausführung in Füllungen 15, die in jeweils einer in die Mehrschicht-Ornamentplatte 10 eingebrachten Ausnehmung 16 angeordnet ist. Obwohl bei dieser Ausführung auch die äußeren Schichten 12 und 13 im Verhältnis zur Gesamtdicke der Mehrschicht-Ornamentplatte 10 relativ dünn sind, kann hier die Tiefe der Musternuten 11 sehr groß sein. Im dargestellten Ausführungsbeispiel liegt der Grund jeder Musternut 11 im Bereich der Kernschicht 14. Das Grundmaterial für die äußeren Schichten 12 und 13 und für die Füllungen 15 kann gleich sein. Besonders ist hier an Polyester gedacht. Besonders vorteilhaft ist bei dieser Ausführung, daß das Material für die Füllungen 15 eingefärbt werden kann, um die sichtbaren Flächen der Musternuten 11 und gegebenenfalls auch der Füllungen 15 farblich anders zu gestalten als die Sichtflächen der Mehrschicht-Ornamentplatte 10. Im Gegensatz zu der Darstellung nach der Fig. 6 könnten die äußeren Schichten 12, 13 auch eine voneinander aufweichende Dicke aufweisen. Der Querschnitt der Musternuten 11 muß nicht eckig sein, sondern könnte in allen denkbaren Formen ausgeführt sein. So ist es beispielsweise naheliegend auf scharfkantige Ecken zu verzichten, da sich gerade hier Staub und Schmutz ablagert, der nur äußerst mühsam zu entfernen ist. Die Tiefe der Ausnehmung 16 ist in einem sehr weiten Maße variierbar. So ist es denkbar, daß sie sich bis an die frei von Musternuten gehaltene äußere Schicht 13 erstreckt. Es ist jedoch auch möglich, daß sie ausschließlich im Bereich der äußeren Schicht 12 liegt, wenn diese im Gegensatz zur Darstellung, wesentlich dicker ist.

Das Ausführungsbeispiel nach der Fi.g 5 unterscheidet sich von dem nach der Fig. 6 dadurch, daß bei gleichbleibender Tiefe der Ausnehmungen 16 die Tiefe der Musternuten entsprechend dem Ausführungsbeispiel nach den Fig. 1 und 2 verhältnismäßig klein ist. Der Grund der Musternuten 11 liegt auch hier innerhalb der äußeren Schicht 12. Hier ist es denkbar, daß die Tiefe der Ausnehmungen 16 gegenüber dem Ausführungsbeispiel nach der Fig. 6 kleiner wird.

Bei den in den Fig. 5 und 6 dargestellten Ausführungsbeispielen werden die Musternuten durch Randstege 15a und 15b begrenzt, die Tei le der Füllung 15 sind, da die Breite der Musternuten 11 ein klein wenig geringer ist als die Breite der Ausnehmung 16. Da zwei Bearbeitungsgänge notwendig sind, können hierdurch entstehende Toleranzen ausgeglichen werden. Außerdem bietet diese Ausführung den großen Vorteil, daß die oberen, einander zugewandt liegenden Ecken der Randstege 15a, 15b abgerundet werden können, wenn der Farbton der Füllungen 15 von der der äußeren Sichten 12, 13 abweicht.

Um eine Mehrschicht-Ornamentplatte 10 gemäß den Fig. 5 oder 6 herzustellen, werden in eine unbearbeitete, aus den äußeren Schichten 12, 13 und der Kernschicht 14 bestehenden Platte zunächst die nutförmigen Ausnehmungen 16 eingefräst. Danach werden die Ausnehmungen 16 mit einem noch fließfähigem Kunststoff randvoll gefüllt, wobei eine fugenfreie Verbindung zustandekommt. Nach dem Erstarren, bzw. Aushärten des Kunststoffes ist die dadurch gebildete Füllung 15 nicht mehr aus der Ausnehmung 16 zu entfernen. Es werden keine Fugen gebildet, in die Feuchtigkeit eindringen kann. Nachdem die Füllung 15 ausgehärtet ist, können die Musternuten 11 gefräst werden. Die Musternuten 11 können die unterschiedlichsten Querschnittsformen aufweisen. Dabei ist es denkbar, daß bei einer Mehrschicht-Ornamentplatte Musternuten 11 unterschiedlicher Querschnitte gefräst werden. Ferner ist es denkbar, daß auch die Farbtöne der Füllungen 15 voneinander abweichen.

## Ansprüche

1. Mehrschicht-Ornamentplatte, bei der die äußeren Schichten aus glasfaserverstärktem Kusntstoff, vorzugsweise aus glasfaserverstärktem Polyester bestehen und die eine aus einem Kunststoffschaum gebildete, mittlere Kernschicht aufweist, **dadurch gekennzeichnet,** daß die Außenlage von wenigstens einer äußeren Schicht (12) glasfaserfrei ist, und daß zumindest diese äußere Schicht bzw. diese äußeren Schichten zur Bildung von Ornamenten mit eingefrästen Musternuten (11) versehen ist, bzw. versehen sind.

2. Mehrschicht-Ornamentplatte nach Anspruch 1, dadurch gekennzeichnet, daß jede Musternut (11) in einer in eine Ausnehmung (16) der Mehrschicht-Ornamentplatte (10) liegenden Füllung (15) vorgesehen ist, und daß die Breite der Musternut (11) ein klein wenig geringer ist als die Breite der Ausnehmung (16) bzw. der Füllung (15).

3. Mehrschicht-Ornamentplatte nach Anspruch 2, dadurch gekennzeichnet, daß sich zumindest die Füllung (15) bis in die mittlere Kernschicht (14) erstreckt.

4. Mehrschicht-Ornamentplatte nach Anspruch 3, dadurch gekennzeichnet, daß sich die Füllung (15) und der Grund der Musternuten (11) bis in den Bereich der Kernschicht (14) erstrecken.

5. Mehrschicht-Ornementplatte nach einem oder mehreren der vorher gehenden Ansprüche, dadurch gekennzeichnet, daß die Musternuten (11) parallel und im Abstand zueinander angeordnet sind.

6. Mehrschicht-Ornamentplatte nach einem oder mehreren der vorhergehenden Ansprüche, dadurch gekennzeichnet, daß die Musternuten (11) schräg zu den Längskanten der Mehrschicht-Ornamentplatte (10) verlaufen.

7. Mehrschicht-Ornamentplatte nach einem oder mehreren der vorhergehenden Ansprüche, dadurch gekennzeichnet, daß der Abstand zwischen zwei Musternuten (11) größer ist als die Breite einer Musternut (11).

8. Mehrschicht-Ornamentplatte nach einem oder mehreren der vorhergehenden Ansrüche, dadurch gekennzeichnet, daß die Tiefe der Musternuten (11),bezogen auf die Dicke der Mehrschicht-Ornamentplatte (10) relativ gering ist, und daß der Grund jeder Musternut (11) innerhalb der zugeordneten äußeren Schicht (12) liegt.

9. Verfahren zur Herstellung einer Mehrschicht-Ornamentplatte nach einem oder mehreren der Ansprüche 2 bis 8, dadurch gekennzeichnet, daß zunächst in eine unbearbeitete im wesentlichen aus den äußeren Schichten (12, 13) und der Kernschicht (14) bestehenden Platte die Ausnehmungen (16) gefertigt werden, daß danach die Ausnehmungen (16) mit einer aushärtbaren Kunststoffmasse gefüllt werden, und daß nach dem Aushärten der eine Füllung (15) bildende Kunststoffmasse die Musternuten (11) gefräst werden.

*Fig. 1*

*Fig. 2*

Repol

Fig. 3

16   12   10   14

13   13a   13b

Fig. 4

15   16   12   10   14

13   13a   13b

15   15a   15b   12   10   14
11   16

13   13a   13b

Fig. 5

15   15a   15b   10   14
11   12   16

13   13a   13b

Fig. 6

Repol